# FASCICULE DE BREVET EUROPEEN

(11) **EP 4 013 680 B1**
(45) Date de publication et mention de la délivrance du brevet: **15.05.2024**
(21) Numéro de dépôt: 20750163.6
(22) Date de dépôt: 11.08.2020
(51) Int. Cl.: B64D 15/04, B64C 7/02, B64D 27/26, B64D 29/00, B64D 33/00, B64D 33/02, F02C 7/047

(54) **ENTRÉE D'AIR D'UNE NACELLE D'UNE TURBOMACHINE D'AÉRONEF**
LUFTEINLASS EINER GONDEL EINER FLUGZEUG STRAHLTRIEBWERKEN
AIR INLET OF A NACELLE OF AN AIRCRAFT JET ENGINE

(30) Priorité: 18.08.2019 FR 1909254
(43) Date de publication de la demande: 22.06.2022
(73) Titulaire: Safran Nacelles, 76700 Gonfreville-l'Orcher (FR)
(72) Inventeur: LONCLE, Alexis Yves-Marie, 77550 MOISSY-CRAMAYEL (FR); VALLEROY, Laurent Georges, 77550 MOISSY-CRAMAYEL (FR)
(74) Mandataire: Argyma
(86) Numéro de dépôt international: PCT/EP2020/072483
(87) Numéro de publication internationale: WO 2021/032534

(56) Documents cités:
- EP-A1- 0 918 149
- EP-A1- 0 922 842
- EP-B1- 0 922 842
- JP-A- H01 237 294
- US-A1- 2014 263 837
- US-A1- 2017 191 585

## Description

### DOMAINE TECHNIQUE

La présente invention concerne le domaine des turbomachines d'aéronef et vise plus particulièrement une entrée d'air d'une nacelle d'une turbomachine d'aéronef.

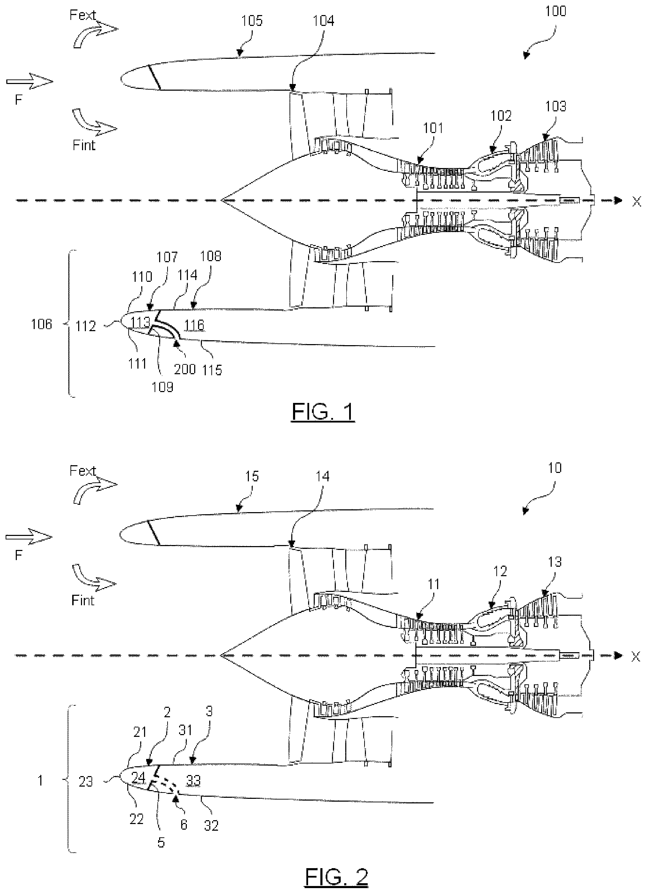

De manière connue, en référence à la figure 1, un aéronef comporte une ou plusieurs turbomachines 100 s'étendant longitudinalement selon un axe X et permettant de déplacer l'aéronef à partir d'un flux d'air entrant F dans la turbomachine 1 et circulant d'amont en aval. Par la suite, les termes « amont » et « aval » sont définis par rapport à l'axe X orienté d'amont en aval. De même, les termes « intérieur » et « extérieur » sont définis selon la direction radiale par rapport à l'axe X.

Comme illustré sur la figure 1, la turbomachine 100 comprend d'amont en aval un compresseur 101, une chambre de combustion 102 et une turbine 103 pour entraîner en rotation le compresseur 101. La turbomachine 100 comprend en outre une soufflante 104 en amont du compresseur 101, montée rotative autour de l'axe X afin d'accélérer le flux d'air entrant F selon l'axe X, et une nacelle 105 s'étendant de manière radialement extérieure par rapport à la soufflante 104.

De manière connue, la nacelle 105 comprend une entrée d'air 106 s'étendant en amont de la soufflante 104, qui permet de séparer le flux d'air entrant F en un flux d'air intérieur Fint qui est guidé vers la soufflante 104 et un flux d'air extérieur Fext qui est guidé extérieurement à la nacelle 105. L'entrée d'air 106 comprend une partie amont 107, connue de l'homme du métier sous la désignation de « lèvre », et une partie aval 108. Dans l'exemple de la figure 1, la lèvre 107 est séparée de la partie aval 108 par une cloison interne 109.

Toujours en référence à la figure 1, la lèvre 107 comporte une paroi intérieure 110 tournée vers l'axe X et une paroi extérieure 111 opposée à la paroi intérieure 110, qui sont reliées par une paroi amont 112 de manière à former avec la cloison interne 109 une cavité annulaire 113, connue de l'homme du métier sous la désignation de « D-Duct ». La partie aval 108 comprend quant à elle une paroi intérieure aval 114 et une paroi extérieure aval 115 dans le prolongement respectivement de la paroi intérieure 110 et de la paroi extérieure 111 de la lèvre 107, qui délimitent ensemble un volume interne 116 dans lequel est généralement monté un ou plusieurs panneaux d'atténuation acoustique.

De manière connue, lors du vol d'un aéronef, du givre est susceptible de s'accumuler au niveau de la lèvre 107 du fait des conditions de température et de pression, jusqu'à former des blocs de givre qui sont amenés à se détacher de la lèvre 107 et à être ingérés par la turbomachine 100. De telles ingestions doivent être évitées afin d'améliorer la durée de vie de la turbomachine 100 et de réduire les dysfonctionnements.

Pour éviter l'accumulation de givre, on connaît dans l'art antérieur un dispositif de dégivrage pneumatique comprenant un conduit d'injection d'un flux d'air chaud sous pression dans la cavité annulaire 113 de la lèvre 107 permettant de chauffer les parois 110, 111, 112. Le flux d'air chaud sous pression est généralement prélevé au niveau du compresseur 101 de la turbomachine 100. Un tel dispositif de dégivrage est notamment décrit dans la demande de brevet WO2010012899.

Pour assurer l'évacuation du flux d'air chaud injecté hors de la cavité annulaire 113, il est connu par les demandes de brevet EP0922842A1 et US2014263837 de prévoir une conduite d'évacuation reliée à la cavité annulaire 113 et débouchant dans la paroi extérieure 115 de la partie aval 108 de l'entrée d'air 106 afin que l'air chaud soit expulsé extérieurement à la nacelle 105. En référence à la figure 1, la conduite d'évacuation 200 s'étend dans le volume interne 116 de la partie aval 108 de l'entrée d'air 106. En pratique, la conduite d'évacuation 200 se présente sous la forme d'un tube coudé en titane dont une extrémité débouche dans un premier orifice de la cloison interne 109 et dont une deuxième extrémité débouche dans la paroi extérieure 115 de la partie aval 108 de l'entrée d'air 106.

Une telle conduite d'évacuation 200 présente l'inconvénient de posséder une masse conséquente afin de résister aux efforts mécaniques importants lors du vol de l'aéronef, en particulier, du fait des dilatations thermiques.

En pratique, pour permettre une liaison robuste et rigide, il est connu d'équiper les extrémités de conduite d'évacuation 200 avec des platines en titane qui sont respectivement fixées au niveau de la cloison interne 109 et de la paroi extérieure aval 115. Des joints d'étanchéité sont en outre traditionnellement ajoutés à l'interface de fixation pour garantir l'étanchéité. L'ajout de platines et de joints d'étanchéité pénalisent encore plus la masse d'une telle conduite d'évacuation 200.

De manière incidente, il est connu par la demande de brevet US2017/191585A1 un procédé de fabrication d'un conduit en thermoplastique renforcé en fibres au moyen d'un mandrin en silicone.

L'invention vise ainsi à permettre une évacuation simple et efficace du flux d'air chaud injecté par le dispositif de dégivrage dans la cavité annulaire, au moyen d'un système qui puisse résister aux efforts mécaniques et qui possède une masse réduite.

### PRESENTATION DE L'INVENTION

L'invention concerne une entrée d'air d'une nacelle de turbomachine d'aéronef s'étendant longitudinalement selon un axe X dans laquelle circule un flux d'air d'amont vers l'aval, ladite entrée d'air comprenant une lèvre s'étendant à l'amont, une partie aval et une cloison interne séparant la lèvre et la partie aval, ladite lèvre comprenant une paroi intérieure tournée vers l'axe X, une paroi extérieure opposée à la paroi intérieure et une paroi amont reliant la paroi intérieure et la paroi extérieure et délimitant avec la cloison interne une cavité annulaire, ladite partie aval comprenant une paroi intérieure aval et une paroi extérieure aval dans le prolongement respectivement de la paroi intérieure et de la paroi extérieure de ladite lèvre et délimitant entre elles un volume interne, ladite entrée d'air comprenant :
i. un dispositif de dégivrage comprenant au moins une conduite d'injection d'un flux d'air chaud dans la cavité annulaire de la lèvre,
ii. au moins une ouverture de passage formée dans la cloison interne
iii. au moins une ouverture de sortie formée dans la paroi extérieure aval de la paroi aval, et
iv.au moins une conduite d'évacuation, montée dans le volume interne de la partie aval, configurée pour conduire le flux d'air chaud de l'ouverture de passage de la cloison interne vers l'ouverture de sortie de la paroi extérieure aval de manière à évacuer le flux d'air chaud à l'extérieur de l'entrée d'air, la conduite d'évacuation comprenant une première extrémité reliée à la cloison interne, une deuxième extrémité reliée à la paroi extérieure aval de la partie aval et un corps principal s'étendant entre la première extrémité et la deuxième extrémité.

L'invention est remarquable en ce que le corps principal de la conduite d'évacuation comporte au moins une portion flexible. Grâce à l'invention, la conduite d'évacuation est apte à résister aux efforts mécaniques en jeu dans l'entrée d'air ainsi qu'aux contraintes engendrées par la dilatation thermique des matériaux. La portion flexible du corps principal peut en effet légèrement se déformer pour répondre auxdits efforts et contraintes en jeu dans l'entrée d'air. La portion flexible permet avantageusement d'atténuer les vibrations entre les extrémités de la conduite d'évacuation. En outre, une telle conduite d'évacuation présente une masse réduite par rapport à un tube en titane selon l'art antérieur. La masse est d'autant plus réduite qu'une telle conduite d'évacuation ne nécessite pas de renforcements supplémentaires au niveau de la première extrémité et de la deuxième extrémité, contrairement à l'art antérieur. Le montage est en outre simplifié du fait de la portion flexible qui offre de plus grandes tolérances de montage.

Selon un exemple illustratif non-revendiqué, l'entrée d'air comprend une unique conduite d'évacuation, suffisante pour évacuer le flux d'air chaud présent dans la cavité annulaire.

Selon un aspect de l'invention, la portion flexible du corps principal comporte au moins un élastomère, de préférence, du silicone. Un tel matériau est apte à se déformer et résiste aux températures élevées du flux d'air chaud, pouvant atteindre 300°C.

Selon un exemple illustratif non-revendiqué, l'élastomère est renforcé par des fibres, de préférence de verre ou de carbone, pour augmenter la résistance mécanique de la conduite d'évacuation sans impacter sur sa masse.

Selon un aspect de l'invention, le corps principal comporte une portion aval et une portion amont, la portion aval étant la portion flexible. De préférence, le corps principal comporte uniquement une portion aval et une portion amont. De manière avantageuse, la portion aval, reliée à la paroi extérieure aval, est celle où s'exercent la majorité des efforts mécaniques. Le caractère flexible de la portion aval permet ainsi de répondre à la majorité des efforts exercés sur la conduite d'évacuation.

De manière préférée, la portion amont du corps principal est rigide pour conférer à la conduite d'évacuation une plus grande résistance mécanique. Selon un exemple illustratif non-revendiqué, la portion amont possède une section de passage plus faible que la section de passage de la portion aval. Une portion amont renforcée permet de réduire les déformations pour une section faible.

Selon un aspect préféré, la portion aval et la portion amont sont reliées de manière étanche, de préférence par vissage, de sorte à assurer une bonne évacuation du flux d'air chaud en dehors de l'entrée d'air.

Selon un aspect illustratif non-revendiqué, le corps principal comporte uniquement une portion flexible, ce qui réduit la masse et octroie une plus grande capacité de distorsion à la conduite d'évacuation.

Selon un autre aspect de l'invention, la première extrémité de la conduite d'évacuation se présente sous la forme d'une première platine, de préférence métallique, de préférence comportant un alliage de titane. De préférence, la deuxième extrémité de la conduite d'évacuation se présente sous la forme d'une deuxième platine, de préférence métallique, de préférence comportant un alliage de titane. De telles extrémités permettent une fixation à la fois étanche et rigide à la cloison interne et à la paroi extérieure aval de la partie aval.

De préférence, la portion flexible comporte une paroi extérieure nervurée.

L'invention concerne également une turbomachine d'aéronef s'étendant longitudinalement selon un axe X dans laquelle circule un flux d'air d'amont vers l'aval, ladite turbomachine comprenant une nacelle comprenant une entrée d'air telle que décrite précédemment.

L'invention concerne en outre un procédé d'évacuation du flux d'air chaud injecté par le dispositif de dégivrage dans la cavité annulaire de la lèvre de l'entrée d'air, telle que décrite précédemment, dans lequel la conduite d'évacuation achemine le flux d'air chaud de l'ouverture de passage de la cloison interne vers l'ouverture de sortie de la paroi extérieure aval, de manière à évacuer le flux d'air chaud à l'extérieur de l'entrée d'air.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
[Fig. 1] est une représentation schématique en coupe longitudinale d'une turbomachine comprenant une entrée d'air selon l'art antérieur ;
[Fig. 2] est une représentation schématique en coupe longitudinale d'une turbomachine comprenant une entrée d'air selon l'invention ;
[Fig. 3] est une représentation schématique en perspective d'une entrée d'air selon un exemple illustratif non revendiqué;
[Fig. 4] est une représentation schématique en perspective d'une entrée d'air selon une forme de réalisation de l'invention et
[Fig. 5] est une représentation schématique en perspective d'une entrée d'air selon une forme de réalisation alternative illustrative non revendiquée.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

Les exemples présentés par la suite en référence aux figures 2 à 5, permettent d'évacuer de manière simple et efficace le flux d'air chaud d'une entrée d'air de turbomachine d'aéronef utilisé pour éviter l'accumulation de givre.

Comme décrit précédemment, en référence à la figure 2, une turbomachine d'aéronef 10 s'étend longitudinalement selon un axe X et permet de déplacer un aéronef à partir d'un flux d'air entrant F circulant d'amont en aval dans ladite turbomachine 10. Par la suite, les termes « amont » et « aval » sont définis par rapport à l'axe X orienté d'amont en aval. De même, les termes « intérieur » et « extérieur » sont définis selon la direction radiale par rapport à l'axe X.

Comme illustré sur la figure 2, la turbomachine 10 comprend d'amont en aval un compresseur 11, une chambre de combustion 12 et une turbine 13 pour entraîner en rotation le compresseur 11. La turbomachine 10 comprend en outre une soufflante 14 en amont du compresseur 11, montée rotative autour de l'axe X afin d'accélérer le flux d'air entrant F selon l'axe X, et une nacelle 15 s'étendant de manière radialement extérieure par rapport à la soufflante 14. La nacelle 15 comprend une entrée d'air 1 s'étendant en amont de la soufflante 14, qui permet de séparer le flux d'air entrant F en un flux d'air intérieur Fint qui est guidé vers la soufflante 14 et un flux d'air extérieur Fext qui est guidé extérieurement à la nacelle 15. On décrit par la suite plus précisément l'entrée d'air 1 de la nacelle 15.

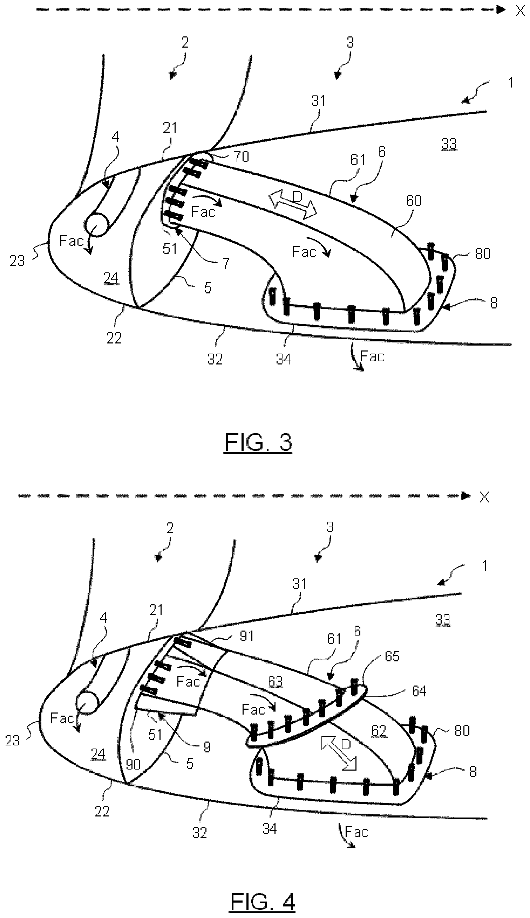

Toujours en référence à la figure 2, l'entrée d'air 1 comprend une partie amont 2, connue de l'homme du métier sous la désignation de « lèvre », et une partie aval 3, qui sont séparées par une cloison interne 5. L'entrée d'air 1 comprend également un dispositif de dégivrage comportant une conduite d'injection 4 d'un flux d'air chaud Fac (Figures 3 et 4) qui est montée dans la lèvre 2 afin de chauffer la lèvre 2 de manière à éviter l'accumulation de givre. L'entrée d'air 1 comprend en outre une conduite d'évacuation 6 montée dans la partie aval 3 et permettant d'évacuer le flux d'air chaud Fac injecté par la conduite d'injection 4 à l'extérieur de l'entrée d'air 1.

Comme illustré sur les figures 2, 3 et 4, la lèvre 2 comporte une paroi intérieure 21 tournée vers l'axe X et une paroi extérieure 22 opposée à la paroi intérieure 21, qui sont reliées par une paroi amont 23 de manière à former avec la cloison interne 5 une cavité annulaire 24, également connue de l'homme du métier sous la désignation de « D-Duct ».

La conduite d'injection 4 d'un flux d'air chaud Fac du dispositif de dégivrage est montée dans la cavité annulaire 24. Dans l'exemple des figures 3 et 4, la conduite d'injection 4 forme une révolution autour de l'axe X dans la cavité annulaire 24 et comprend une pluralité de perforations, de manière à injecter le flux d'air chaud Fac dans l'ensemble de la cavité annulaire 24, de manière à chauffer uniformément les parois 21, 22, 23 de la lèvre 2. Une telle conduite d'injection 4 est connue de l'homme du métier.

Comme illustré sur les figures 2, 3 et 4, la partie aval 3 de l'entrée d'air 1 comporte quant à elle une paroi intérieure aval 31 et une paroi extérieure aval 32 dans le prolongement respectivement de la paroi intérieure 21 et de la paroi extérieure 22 de la lèvre 2. La partie aval 3 comporte également un volume interne 33 délimité par la paroi intérieure aval 31, par la paroi extérieure aval 32 et par la cloison interne 5.

En référence aux figures 3 et 4, la cloison interne 5 comprend par ailleurs une ouverture de passage 51 permettant de mettre en communication fluidique la cavité annulaire 24 de la lèvre 2 et le volume interne 33 de la partie aval 3. De préférence, la cloison interne 5 comprend plusieurs ouvertures de passages 51 se présentant sous la forme de fentes, de préférence encore, disposées parallèlement les unes à côté des autres. Il va cependant de soi que la cloison interne 5 peut comprendre une unique ouverture de passage 51, de taille et de forme quelconques. La cloison interne 5 peut également comprendre plusieurs ouvertures de passage 51 réparties à différentes positions angulaires autour de l'axe X.

Toujours en référence aux figures 3 et 4, la paroi extérieure aval 32 comprend, de manière analogue à la cloison interne 5, une ouverture de sortie 34 permettant de mettre en communication fluidique le volume interne 33 de la partie aval 3 et l'extérieur de l'entrée d'air 1. De préférence, la paroi extérieure aval 32 comprend plusieurs ouvertures de sortie 34 se présentant sous la forme de fentes disposées parallèlement les unes à côté des autres. Il va cependant de soi que la paroi extérieure aval 32 peut comprendre une unique ouverture de sortie 34, de taille et de forme quelconques. La paroi extérieure aval 32 peut également comprendre plusieurs ouvertures de sortie 34 réparties à différentes positions angulaires autour de l'axe X.

Comme illustré sur les figures 3 et 4, la conduite d'évacuation 6 est montée dans le volume interne 33 de la partie aval 3 et est configurée pour mettre en communication fluidique l'ouverture de passage 51 de la cloison interne 5 et l'ouverture de sortie 34 de la paroi extérieure aval 32, de manière à évacuer le flux d'air chaud Fac contenu dans la cavité annulaire 24 vers l'extérieur de l'entrée d'air 1.

Dans cet exemple, l'entrée d'air 1 comporte une unique ouverture de passage 51 et une unique ouverture de sortie 34, la conduite d'évacuation 6 étant configurée pour mettre en communication fluidique l'unique ouverture de passage 51 de la cloison interne 5 et l'unique ouverture de sortie 34. Il va de soi qu'une conduite d'évacuation 6 peut mettre en communication fluidique une/plusieurs ouvertures de passage 51 de la cloison interne 5 et une/plusieurs ouvertures de sortie 34 de la paroi extérieure aval 32 en fonction des configurations. De préférence, l'entrée d'air 1 comprend une unique conduite d'évacuation 6, suffisante pour évacuer le flux d'air chaud Fac. Toutefois, il va de soi que l'entrée d'air 1 pourrait comprendre plusieurs conduites d'évacuation 6 à différentes positions angulaires autour de l'axe X, assurant chacune la communication fluidique entre une ou plusieurs ouvertures de passage 51 et une ou plusieurs ouvertures de sortie 34.

En référence aux figures 3 et 4, une conduite d'évacuation 6 comprend une première extrémité 7, 9 reliée à la cloison interne 5, une deuxième extrémité 8 reliée à la paroi extérieure aval 32 et un corps principal 61 s'étendant entre la première extrémité 7, 9 et la deuxième extrémité 8. Dans l'exemple des figures 3 et 4, la première extrémité 7, 9 s'étend sensiblement perpendiculairement à la deuxième extrémité si bien que le corps principal 61 possède une forme coudée pour pouvoir relier la première extrémité 7, 9 et la deuxième extrémité 8. De préférence, le corps principal 61 possède une forme coudée arrondie de manière à assurer une circulation avec de faibles pertes de charge du flux d'air chaud Fac. Par ailleurs, dans l'exemple des figures 3 et 4, la section de la conduite d'évacuation 6 est rectangulaire mais il va de soi que la section pourrait être différente, telle que circulaire à titre d'exemple.

Dans cet exemple, le corps principal 61 possède une section sensiblement croissante de l'amont vers l'aval afin de faciliter l'évacuation.

Selon l'invention, le corps principal 61 de la conduite d'évacuation 6 comporte au moins une portion flexible 60, 62 comme illustré aux figures 3 et 4. Comme cela sera présenté par la suite, selon une première forme de réalisation de l'invention illustrée sur la figure 3, le corps principal 61 est totalement flexible ou, une deuxième forme de réalisation de l'invention illustrée sur la figure 4, partiellement flexible. Le terme « flexible » est ici utilisé pour désigner la capacité du corps principal 61 à se courber légèrement sans se rompre, c'est-à-dire à subir une déformation mécanique D, par opposition au terme « rigide ». Une portion flexible s'oppose à une portion métallique rigide telle que connue de l'art antérieur.

De préférence, la portion flexible 60, 62 du corps principal 61 comporte un élastomère, par exemple du silicone, présentant une bonne flexibilité et résistant aux hautes températures observées dans l'entrée d'air 1. De préférence, l'élastomère est renforcé par des fibres, pour augmenter la résistance mécanique de la conduite d'évacuation 6, les fibres étant préférentiellement des fibres de verre ou des fibres de carbone.

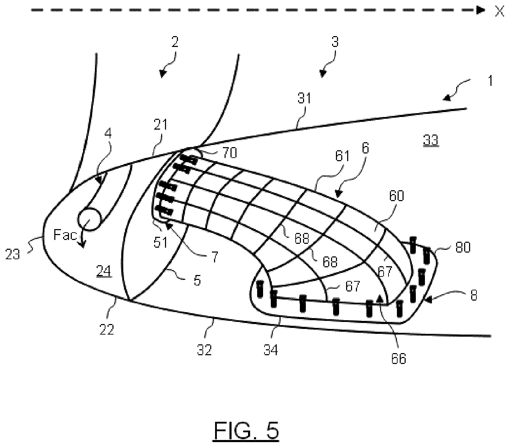

De préférence également, comme illustré sur la figure 5, la portion flexible 60 comporte une paroi extérieure nervurée 66 afin d'augmenter sa résistance mécanique. Dans cet exemple, la paroi extérieure nervurée 66 comporte des nervures longitudinales 67 s'étendant dans la longueur de la portion flexible 60 autrement dit suivant l'axe curviligne de la portion flexible 60, ainsi que des nervures transversales 68. Les nervures transversales 68 épousent la forme de la section de la portion flexible 60 dans cet exemple rectangulaire, et permettent avantageusement de conserver la forme de ladite section de la portion flexible 60. Les nervures longitudinales 67 permettent quant à elles avantageusement une meilleure résistance mécanique au flambage. Il va de soi que la paroi extérieure nervurée 66 pourrait comprendre uniquement des nervures longitudinales 67 ou des nervures transversales 68, voire comprendre des nervures d'orientation quelconque.

De manière avantageuse, une telle conduite d'évacuation 6 est capable d'absorber les efforts mécaniques en jeu dans l'entrée d'air 1 et de compenser la dilatation thermique des matériaux de l'entrée d'air 1, en subissant une déformation mécanique D. Une telle conduite d'évacuation 6 présente donc une tenue mécanique plus pérenne par rapport au tube coudé en titane de l'art antérieur. En particulier, les contraintes mécaniques s'exerçant au niveau des extrémités 7, 8, 9 sont significativement diminuées. Par ailleurs, la conduite d'évacuation 6 présente une masse très réduite par rapport au tube coudé en titane de l'art antérieur, ce qui présente un avantage important pour une application aéronautique. Une telle conduite d'évacuation 6 possède une meilleure résistance aux vibrations mécaniques et est plus simple à monter.

On décrit par la suite successivement un corps principal 61 entièrement flexible selon une première forme de réalisation de l'invention (Figure 3) et un corps principal 61 partiellement flexible selon la deuxième forme de réalisation de l'invention (Figure 4).

Selon un premier exemple illustratif non revendiqué, en référence à la figure 3, la conduite d'évacuation 6 comporte un corps principal 61 totalement flexible, ce qui octroie une grande capacité de déformation D à la conduite d'évacuation 6. Autrement dit, le corps principal 61 est constitué de la portion flexible 60.

Dans l'exemple de la figure 3, la première extrémité 7 et la deuxième extrémité 8 se présentent sous la forme de platines 70, 80, dites respectivement « première platine 70 » et « deuxième platine 80 », configurées pour être fixées contre la cloison interne 5 et la paroi extérieure aval 32 respectivement. Dans cet exemple, la première platine 70 et la deuxième platine 80 comprennent des perforations à leur périphérie configurées pour recevoir des tiges de fixation telles que des vis ou des clous, afin d'être fixées. Il va de soi que la première platine 70 et/ou la deuxième platine 80 pourraient être fixées autrement, comme par collage à titre d'exemple, toutefois une fixation par vissage présente l'avantage d'être robuste et pérenne. Il va également de soi que les extrémités pourraient se présenter sous une autre forme que des platines, toutefois de telles platines présentent l'avantage d'avoir un encombrement réduit.

De manière préférée, la première platine 70 et/ou la deuxième platine 80 sont aplaties de manière à coopérer par complémentarité de formes avec la cloison interne 5 et/ou la paroi extérieure aval 32, ce qui améliore l'étanchéité.

De préférence, la première platine 70 et/ou la deuxième platine 80 sont métalliques pour posséder une résistance mécanique suffisantes. Dans cet exemple, les platines 70, 80 comportent un alliage de titane. De manière avantageuse, de telles platines 70, 80 sont suffisantes pour assurer la tenue de la conduite d'évacuation 6. L'ajout de renforcements et/ou de joints d'étanchéité n'est pas nécessaire contrairement à l'art antérieur, ce qui permet de réduire d'autant plus la masse de la conduite d'évacuation 6. Ainsi, la conduite d'évacuation 6 comporte un corps principal 61 relié à une première platine 70 et à une deuxième platine 80 rigides, qui sont de préférence métalliques. Cela permet d'assurer un compromis entre flexibilité et rigidité, la portion flexible 60 atténuant les vibrations entre les extrémités de la conduite d'évacuation 6.

Selon une forme de réalisation de l'invention, en référence à la figure 4, le corps principal 61 de la conduite d'évacuation comporte une portion aval 62 qui est flexible et une portion amont 63 qui est rigide. Dans cet exemple, la portion amont 63 est métallique et comporte, de préférence, un alliage de titane.

De manière avantageuse, la portion aval 62 permet de compenser les efforts mécaniques présents dans l'entrée d'air 1 tandis que la portion amont 63 présente une meilleure résistance mécanique. Une résistance mécanique accrue en amont est avantageuse étant donné que la section de la conduite d'évacuation 6 est plus faible en amont. De plus, l'encombrement est plus contraint en amont et une résistance mécanique accrue permet de réduire tout débattement indésirable de la conduite d'évacuation. De plus, la partie aval de la conduite d'évacuation 6 correspond à la zone la plus sujette à la rupture mécanique sous l'effet de contraintes mécaniques. L'utilisation d'une portion aval 62 flexible permet de réduire le risque de rupture.

Cette forme de réalisation permet ainsi avantageusement de combiner les avantages d'un tube rigide et d'une conduite d'évacuation 6 flexible.

De même que pour le premier exemple illustratif, la première extrémité 9 et la deuxième extrémité 8 de la conduite d'évacuation 6 se présentent sous la forme de platines 90, 80, dites respectivement « première platine 90 » et « deuxième platine 80 ». Toutefois, comme illustré sur la figure 4, la première extrémité 9 comporte également de préférence des renforcements pour compenser la rigidité de la portion amont 63. Dans l'exemple de la figure 4, les renforcements se présentent sous la forme de contreforts 91 en appui contre la cloison interne 5. Un joint d'étanchéité pourrait également être ajouté sur la première extrémité 9.

Toujours en référence à la figure 4, la portion aval 62 et la portion amont 63 sont reliées de manière étanche. Dans cet exemple, la portion amont 63 comprend une première extrémité de liaison, opposée à la première extrémité 9, qui se présente sous la forme d'une platine 65, dite « troisième platine 65 ». De même, la portion aval 62 comprend une deuxième extrémité de liaison, opposée à la deuxième extrémité 8, qui se présente sous la forme d'une platine 64, dite « quatrième platine 64 ». De même que précédemment, la troisième platine 65 et la quatrième platine 64 sont perforées et configurées pour coopérer par vissage. Il va cependant de soi que la portion aval 62 et la portion amont 63 pourraient être reliées autrement.

Suivant un autre exemple illustratif non revendiqué et non représenté, la portion amont 63 et la portion aval 62 pourraient être flexibles et reliées ensemble de manière modulaire. Suivant un autre exemple illustratif non revendiqué et non représenté, la portion amont 63 est flexible tandis que la portion aval 62 est rigide. Des renforcements et/ou un joint d'étanchéité sont alors de préférence ajoutés sur la deuxième extrémité 8 mais ne seraient plus nécessaires sur la première extrémité 9. Suivant un autre exemple illustratif non revendiqué et non représenté, le corps principal 61 pourrait comprendre plus de deux portions différentes. En particulier, le corps principal 61 pourrait comprendre une alternance de portions rigides et de portions flexibles.

On décrit par la suite un procédé d'évacuation du flux d'air chaud Fac injecté par la conduite d'injection 4 dans la cavité annulaire 24, au moyen de la conduite d'évacuation 6 précédemment décrite. En référence aux figures 3 et 4, le flux d'air chaud sous pression Fac circule dans la cavité annulaire 24 pour dégivrer les parois 21-23 de la lèvre 1. Puis, le flux d'air chaud sous pression Fac contenu dans la cavité annulaire 24 est aspiré par l'ouverture de passage 51 puis est acheminé par la conduite d'évacuation 6 jusqu'à l'ouverture de sortie 34, où le flux d'air chaud Fac est relâché à l'extérieur de l'entrée d'air 1.

Grâce à l'invention précédemment décrite, le flux d'air chaud Fac injecté dans la cavité annulaire 24 de la lèvre 2 peut être évacué de manière simple et pratique, grâce à une conduite d'évacuation 6 de masse réduite. Le caractère flexible de la conduite d'évacuation 6 permet en outre d'absorber les efforts mécaniques dans l'entrée d'air 1 ainsi que de compenser la dilatation thermique des matériaux due aux conditions de température dans l'entrée d'air 1 en vol, ce qui rend la conduite d'évacuation 6 plus efficace et plus pérenne. Le montage est en outre simplifié du fait de la portion flexible 60, 62 qui offre de plus grandes tolérances de montage.

## Revendications

1. Entrée d'air (1) d'une nacelle (15) de turbomachine d'aéronef (10) s'étendant longitudinalement selon un axe X dans laquelle circule un flux d'air (F) d'amont vers l'aval, ladite entrée d'air (1) comprenant une lèvre (2) s'étendant à l'amont, une partie aval (3) et une cloison interne (5) séparant la lèvre (2) et la partie aval (3), ladite lèvre (2) comprenant une paroi intérieure (21) tournée vers l'axe X, une paroi extérieure (22) opposée à la paroi intérieure (21) et une paroi amont (23) reliant la paroi intérieure (21) et la paroi extérieure (22) et délimitant avec la cloison interne (5) une cavité annulaire (24), ladite partie aval (3) comprenant une paroi intérieure aval (31) et une paroi extérieure aval (32) dans le prolongement respectivement de la paroi intérieure (21) et de la paroi extérieure (22) de ladite lèvre (2) et délimitant entre elles un volume interne (33), ladite entrée d'air (1) comprenant :
- un dispositif de dégivrage comprenant au moins une conduite d'injection (4) d'un flux d'air chaud (Fac) dans la cavité annulaire (24) de la lèvre (2),
- au moins une ouverture de passage (51) formée dans la cloison interne (5)
- au moins une ouverture de sortie (34) formée dans la paroi extérieure aval (32) de la partie aval (3) de l'entrée d'air (1), et
- au moins une conduite d'évacuation (6), montée dans le volume interne (33) de la partie aval (3), configurée pour conduire le flux d'air chaud (Fac) de l'ouverture de passage (51) de la cloison interne (5) vers l'ouverture de sortie (34) de la paroi extérieure aval (32) de manière à évacuer le flux d'air chaud (Fac) à l'extérieur de l'entrée d'air (1), la conduite d'évacuation (6) comprenant une première extrémité (7, 9) reliée à la cloison interne (5), une deuxième extrémité (8) reliée à la paroi extérieure aval (32) de la partie aval (3) et un corps principal (61) s'étendant entre la première extrémité (7, 9) et la deuxième extrémité (8), entrée d'air (1) **caractérisée par le fait que** le corps principal (61) comportant une portion aval (62) et une portion amont (63), la portion aval (62) étant flexible, la portion amont (63) du corps principal (61) étant rigide.

2. Entrée d'air (1) selon la revendication 1, dans laquelle la portion flexible (62) du corps principal (61) comporte au moins un élastomère, de préférence, du silicone.

3. Entrée d'air (1) selon l'une des revendications 1 et 2, dans laquelle la portion aval (62) et la portion amont (63) sont reliées de manière étanche, de préférence par vissage.

4. Entrée d'air (1) selon l'une des revendications 1 à 3, dans laquelle la première extrémité (7, 9) de la conduite d'évacuation (6) se présente sous la forme d'une première platine (70, 90), de préférence métallique.

5. Entrée d'air (1) selon l'une des revendications 1 à 4, dans laquelle la deuxième extrémité (8) de la conduite d'évacuation (6) se présente sous la forme d'une deuxième platine (80), de préférence métallique.

6. Turbomachine d'aéronef (10) s'étendant longitudinalement selon un axe X dans laquelle circule un flux d'air (F) d'amont vers l'aval, ladite turbomachine (10) comprenant une nacelle (15) comprenant une entrée d'air (1) selon l'une des revendications 1 à 5.

7. Procédé d'évacuation du flux d'air chaud (Fac) injecté par le dispositif de dégivrage (4) dans la cavité annulaire (24) de la lèvre (2) de l'entrée d'air (1), selon l'une des revendications 1 à 5, dans lequel la conduite d'évacuation (6) achemine le flux d'air chaud (Fac) de l'ouverture de passage (51) de la cloison interne (5) vers l'ouverture de sortie (34) de la paroi extérieure aval (32), de manière à évacuer le flux d'air chaud (Fac) à l'extérieur de l'entrée d'air (1).

## Patentansprüche

1. Lufteinlass (1) einer Gondel (15) eines Strahltriebwerks eines Fluggeräts (10), das sich längs gemäß einer Achse X erstreckt, in der ein Luftstrom (F) von stromaufwärts nach stromabwärts zirkuliert, wobei der Lufteinlass (1) eine Lippe (2), die sich stromaufwärts erstreckt, einen stromabwärtigen Teil (3) und eine innere Trennwand (5), die die Lippe (2) und den stromabwärtigen Teil (3) trennen, umfasst, wobei die Lippe (2) eine Innenwand (21), die zur Achse X zeigt, eine Außenwand (22) gegenüber der Innenwand (21) und eine stromaufwärtige Wand (23), die die Innenwand (21) und die Außenwand (22) verbindet und mit der inneren Trennwand (5) einen ringförmigen Hohlraum (24) begrenzt, umfasst, wobei der stromabwärtige Teil (3) eine stromabwärtige Innenwand (31) und eine stromabwärtige Außenwand (32) in der jeweiligen Verlängerung der Innenwand (21) und der Außenwand (22) der Lippe (2) umfasst und zwischen diesen ein Innenvolumen (33) begrenzt, wobei der Lufteinlass (1) umfasst:
- eine Enteisungsvorrichtung, die mindestens eine Leitung zum Einleiten (4) eines warmen Luftstroms (Fac) in den ringförmigen Hohlraum (24) der Lippe (2) umfasst,
- mindestens eine Durchgangsöffnung (51), die in der inneren Trennwand (5) ausgebildet ist,
- mindestens eine Ausgangsöffnung (34), die in der stromabwärtigen Außenwand (32) des stromabwärtigen Teils (3) des Lufteinlasses (1) ausgebildet ist, und
- mindestens eine Ableitungsführung (6), die in dem Innenvolumen (33) des stromabwärtigen Teils (3) angebracht ist, die dazu ausgelegt ist, den warmen Luftstrom (Fac) von der Durchgangsöffnung (51) der innere Trennwand (5) zur Ausgangsöffnung (34) der stromabwärtigen Außenwand (32) derart zu leiten, dass der warme Luftstrom (Fac) außerhalb des Lufteinlasses (1) abgeleitet wird, wobei die Ableitungsführung (6) ein erstes Ende (7, 9), das mit der inneren Trennwand (5) verbunden ist, ein zweites Ende (8), das mit der stromabwärtigen Außenwand (32) des stromabwärtigen Teils (3) verbunden ist, und einen Hauptkörper (61), der sich zwischen dem ersten Ende (7, 9) und dem zweiten Ende (8) erstreckt, umfasst, wobei der Lufteinlass (1) **dadurch gekennzeichnet ist, dass** der Hauptkörper (61) einen stromabwärtigen Abschnitt (62) und einen stromaufwärtigen Abschnitt (63) aufweist, wobei der stromabwärtige Abschnitt (62) flexibel ist, wobei der stromaufwärtige Abschnitt (63) des Hauptkörpers (61) starr ist.

2. Lufteinlass (1) nach Anspruch 1, wobei der flexible Abschnitt (62) des Hauptkörpers (61) mindestens ein Elastomer aufweist, vorzugsweise Silikon.

3. Lufteinlass (1) nach einem der Ansprüche 1 und 2, wobei der stromabwärtige Abschnitt (62) und der stromaufwärtige Abschnitt (63) dicht verbunden sind, vorzugsweise durch Schrauben.

4. Lufteinlass (1) nach einem der Ansprüche 1 bis 3, wobei das erste Ende (7, 9) der Ableitungsführung (6) in Form einer ersten Platte (70, 90) vorliegt, die vorzugsweise metallisch ist.

5. Lufteinlass (1) nach einem der Ansprüche 1 bis 4, wobei das zweite Ende (8) der Ableitungsführung (6) in Form einer zweiten Platte (80) vorliegt, die vorzugsweise metallisch ist.

6. Strahltriebwerk eines Fluggeräts (10), das sich längs gemäß einer Achse X erstreckt, wobei ein Luftstrom (F) von stromaufwärts nach stromabwärts zirkuliert, wobei das Strahltriebwerk (10) eine Gondel (15) umfasst, die einen Lufteinlass (1) nach einem der Ansprüche 1 bis 5 umfasst.

7. Verfahren zur Ableitung eines warmen Luftstroms (Fac), der von der Enteisungsvorrichtung (4) in den ringförmigen Hohlraum (24) der Lippe (2) des Lufteinlasses (1) nach einem der Ansprüche 1 bis 5 eingeleitet wird, wobei die Ableitungsführung (6) den warmen Luftstrom (Fac) von der Durchgangsöffnung (51) der inneren Trennwand (5) zur Ausgangsöffnung (34) der stromabwärtigen Außenwand (32) derart befördert, dass der warme Luftstrom (Fac) außerhalb des Lufteinlasses (1) abgeleitet wird.

## Claims

1. An air intake (1) of a nacelle (15) of an aircraft turbomachine (10) extending longitudinally along an axis X in which an air flow (F) circulates from upstream to downstream, said air intake (1) comprising a lip (2) extending upstream, a downstream part (3) and an internal partition wall (5) separating the lip (2) and the downstream part (3), said lip (2) comprising an internal wall (21) facing the axis X, an external wall (22) opposite to the internal wall (21) and an upstream wall (23) connecting the internal wall (21) and the external wall (22) and delimiting with the internal partition wall (5) an annular cavity (24), said downstream part (3) comprising a downstream internal wall (31) and a downstream external wall (32) as an extension of the internal wall (21) and the external wall (22) of said lip (2) respectively, and delimiting between them an internal volume (33), said air intake (1) comprising:
- a de-icing device comprising at least one duct (4) for injecting a hot air flow (Fac) into the annular cavity (24) of the lip (2),
- at least one passage opening (51) formed in the internal partition wall (5)
- at least one outlet opening (34) formed in the downstream external wall (32) of the downstream part (3) of the air intake (1), and
- at least one discharge conduit (6), mounted in the internal volume (33) of the downstream part (3), configured to conduct the hot air flow (Fac) from the passage opening (51) of the internal partition wall (5) to the outlet opening (34) of the downstream external wall (32) so as to discharge the hot air flow (Fac) outwardly of the air intake (1), the discharge conduit (6) comprising a first end (7, 9) connected to the internal partition wall (5), a second end (8) connected to the downstream external wall (32) of the downstream part (3) and a main body (61) extending between the first end (7, 9) and the second end (8), which air intake (1) is **characterized in that** the main body (61) comprises a downstream portion (62) and an upstream portion (63), the downstream portion (62) being flexible, the upstream portion (63) of the main body (61) being rigid.

2. The air intake (1) according to claim 1, wherein the flexible portion (62) of the main body (61) comprises at least one elastomer, preferably silicone.

3. The air intake (1) according to any of claims 1 and 2, wherein the downstream portion (62) and the upstream portion (63) are sealingly connected, preferably by screwing.

4. The air intake (1) according to any of claims 1 to 3, wherein the first end (7, 9) of the discharge conduit (6) is in the form of a first plate (70, 90), preferably metallic type.

5. The air intake (1) according to any of claims 1 to 4, wherein the second end (8) of the discharge conduit (6) is in the form of a second plate (80) preferably metallic type.

6. An aircraft turbomachine (10) extending longitudinally along an axis X in which an air flow (F) circulates from upstream to downstream, said turbomachine (10) comprising a nacelle (15) comprising an air intake (1) according to one of claims 1 to 5.

7. A method for discharging the hot air flow (Fac) injected by the de-icing device (4) into the annular cavity (24) of the lip (2) of the air intake (1), according to one of claims 1 to 5, wherein the discharge conduit (6) conveys the hot air flow (Fac) from the passage opening (51) of the internal wall (5) to the outlet opening (34) of the downstream external wall (32), so as to discharge the hot air flow (Fac) outwardly of the air intake (1).
